# EUROPÄISCHE PATENTSCHRIFT

(11) **EP 1 675 458 B1**
(45) Veröffentlichungstag und Bekanntmachung des Hinweises auf die Patenterteilung: **16.06.2010**
(21) Anmeldenummer: 04762731.0
(22) Anmeldetag: 02.09.2004
(51) Int. Cl.: A01N 1/02

(54) **Extrakorporale Organaufbewahrung**
Extracorporeal organ conservation
Conservation d'organes extracorporelle

(30) Priorität: 03.09.2003 DE 10340488
(43) Veröffentlichungstag der Anmeldung: 05.07.2006
(73) Patentinhaber: Technische Universität Dresden, 01069 Dresden (DE); Universität Leipzig, 04109 Leipzig (DE)
(72) Erfinder: ARZT, Joachim, 08468 Reichenbach (DE); GNÜCHTEL, Albrecht, 01309 Dresden (DE); THIELE, Christine, 01129 Dresden (DE); SCHÖN, Michael, 04157 Leipzig (DE)
(74) Vertreter: Kaufmann, Sigfrid
(86) Internationale Anmeldenummer: PCT/DE2004/001944
(87) Internationale Veröffentlichungsnummer: WO 2005/022994

(56) Entgegenhaltungen:
- EP-A- 1 062 870
- WO-A1-94/28710
- DE-A1- 4 342 728
- DE-A1- 10 015 807
- SCHÖN M R ET AL: "Liver transplantation after organ preservation with normothermic extracorporeal perfusion." ANNALS OF SURGERY. JAN 2001, Bd. 233, Nr. 1, Januar 2001 (2001-01), Seiten 114-123, XP008042053 PILADELPHIA, US ISSN: 0003-4932
- SCHÖN M.R.: "Transplantation von Lebern nicht-herzschlagender Spender im Schweineleber-Transplantationsmodell" HABILITATIONSSCHRIFT ZUR DER ERLANGUNG DER VENIA LEGENDI FUER DES FACH CHIRURGIE VORGRLEGT DER MEDIZINISCHEN FAKULTAET CHARITE DERHUMBOLDT-UNIVERSITAET ZU BERLIN, 1999, XP002314065
- NEUHAUS P.: "Extrakorporale Leberperfusion: Entwicklung und Erprobung eines neuen Modells" HABILITATIONSCHRIFT ; MEDIZINISCHE HOCHSCULE HANNOVER, 1982, page 29,

## Beschreibung

Die Erfindung betrifft eine Anordnung zur extrakorporalen Organaufbewahrung, die in bekannter Weise dazu dient, die Vitalfunktionen von Organen künstlich aufrecht zu erhalten oder zu regenerieren. Im Folgenden soll der Begriff Organe auch Extremitäten und Gewebelappen und dergleichen umfassen; Organ wird dementsprechende als Oberbegriff verwendet.

Ein wichtiges Einsatzgebiet ist insbesondere der Organtransport oder im weiteren biochemische oder pharmakologische Untersuchung an isolierten Organen.

Einrichtungen für die Perfusion isolierter Organe sind bekannt.

Schön, M. R. verwendet in einer Perfusionseinrichtung eine solche flüssigkeitsgefüllte geschlossene Organperfusionskammer mit zyklischen Druckschwankungen zur normothermen extrakorporalen Leberperfusion (Transplantation von Lebern nichtherzschlagender Spender im Schweineleber-Transplantationsmodell - Habilitationsschrift 1999. Humboldt Universität zu Berlin). Die vorgeschlagene Organperfusionskammer wird von Wasser durchströmt, das mit einem externen Wärmetauscher auf etwa 37 °C erwärmt wird. Dieser Kreislauf ist zusätzlich zum Perfusionskreislauf und zum Dialysatkreislauf erforderlich. Dementsprechende Auszüge aus der Habilitationsschrift wurden von M. R. Schön et. al. sind auch unter dem Titel "Liver Transplantation After Organ Preservation With Normothermic Extracorporeal Perfusion" in den ANNALS OF SURGERY, Vol. 233, No. 1, Seite 114-123, veröffentlicht.

Auch in DE 100 15 807 A1 und WO 94/28710 A1 werden Anordnungen mit sowohl einem Perfusat- als auch einem Dialysatkreislauf offenbart. Bei beiden Anordnungen sind jedoch ebenfalls die Organperfusionskammer und das Dialysatvorratsgefäß als zwei getrennte Kammern ausgeführt.

In EP 1 062 870 A2 wird eine Anordnung zur extrakorporalen Organaufbewahrung mit mindestens einer temperaturgeregelten Organperfusionskammer vorgestellt, bei der das Organ in einer impermeablen Schutzhülle eingelagert ist. Die Schutzhülle ist vollständig von einer gleichzeitig als Perfusat genutzten Lagerflüssigkeit umgeben, die sich in einem kastenartigen Behälter befindet. Ein Dialysatkreislauf, der für eine optimale Lagerung von Spenderlebern notwendig ist, wird in dieser Schrift jedoch nirgendwo erwähnt.

Des Weiteren wird in DE 43 42 728 A1 angeregt, Spenderlebern direkt in einer wässrigen, elektrolythaltigen Perfusionslösung zu lagern. Da die Leber jedoch in direktem Kontakt mit der Lösung steht, muss diese ein physiologisches Substrat für die Leber darstellen. Um dies zu erreichen ist es notwendig, der Perfusionslösung Sauerstoffträger, wie Perflurcarbon-Emulsionen, und Fettemulsionen beizugeben. Zusätzlich wird die Perfusionslösung mittels Durchleiten von gasförmigem Sauerstoff weiter mit Sauerstoff angereichert. Die Anreicherung der Lösung mit Sauerstoff und Fetten ist mit erheblichem Aufwand verbunden.

Der Erfindung liegt die Aufgabe zugrunde, einen möglichst einfachen Aufbau einer Anordnung zur extrakorporalen Organaufbewahrung zu schaffen. Insbesondere bei der Transplantationschirurgie ist der Transport - und die Aufrechterhaltung der Funktionsfähigkeit der Organe - eine wesentliche Aufgabe einer teilweise weltweit operierenden Organ- und Transplantationslogistik.

Diese Aufgabe wird erfindungsgemäß durch die kennzeichnenden Merkmale des Hauptanspruches gelöst.
Weitere vorteilhafte Ausführungen ergeben sich aus den nachfolgenden Ansprüchen.

Die erfindungsgemäße Anordnung zur extrakorporalen Organaufbewahrung besteht mindestens aus einer Organperfusionskammer mit einer regelbaren Temperatureinrichtung.
In dieser Organperfusionskammer ist ein Organ eingelagert, welches von einer Schutzhülle ummantelt ist. Die Schutzhülle ist vorzugsweise als impermeabler Kunststoffbeutel ausgeführt. Das derart geschützte Organ ist vollständig schwebend in einer Lagerflüssigkeit eingelagert.

Der Erfindung liegt der Gedanke zugrunde, das ohnehin vorhandene Dialysat als Lagerflüssigkeit zu nutzen. Das Dialysat ist ein wesentlicher Bestandteil zur Aufrechterhaltung der Vitalfunktionen des Organs und infolge dessen auch wesentlicher Bestandteil des vitalerhaltenden Kreislaufes, der sich aus einem Dialysatkreislauf und einem Perfusatkreislauf zusammensetzt, zur Versorgung des extrakorporalen Organs. Erfindungsgemäß wird der notwendige Dialysatkreislauf und die dazu notwendigen Aggregate genutzt, die Lagerflüssigkeit als Dialysat in den Dialysatkreislauf einzubinden und die Organperfusionskammer gleichzeitig als Speicher für das Dialysat zu verwenden.

Die Organperfusionskammer ist flüssigkeits- und druckdicht hermetisch geschlossen. Neben der medizinischen Notwendigkeit ist damit insbesondere eine Transportfähigkeit per Flugzeug und Hubschrauber gewährleistet.

Die Bewandung der Organperfusionskammer, die Schutzhülle und das Dialysat sind transparent ausgeführt.

Eine regelbare Temperatureinrichtung schafft für das extrakorporale Organ eine normotherme oder hypotherme Umgebungstemperatur. Die Temperatureinrichtung ist bevorzugt als Heizmatte ausgeführt, die den Boden der Organperfusionskammer auskleidet. Die Strömung des Dialysats sorgt für eine gleichmäßige Temperierung des isolierten Organs. In einer weiteren bevorzugten Ausführungsform ist die Temperatureinrichtung durch Wärme- bzw. Kälteschleifen in die Bewandung der Organperfusionskammer integriert.

Mehrere Messsonden nehmen Kenngrößen und Parameter, beispielgebend Füllstand, Druck, Temperatur auf und machen diese Signale für eine Anzeigeeinrichtung oder einer digitalen Prozesssteuerung verarbeitbar.

Im folgenden wird ein Ausführungsbeispiel der Erfindung anhand der beigefügten Zeichnung näher erläutert.

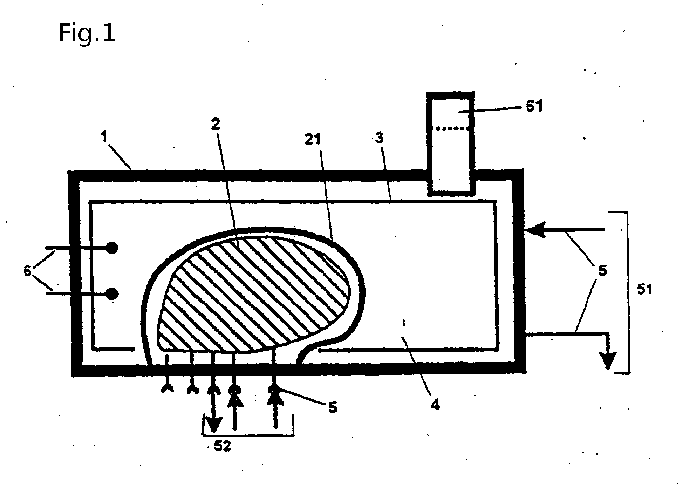

Figur 1 zeigt eine Schemadarstellung einer Anordnung zur extrakorporalen Organaufbewahrung. Die Anordnung besteht aus einer transparenten Organperfusionskammer 1. Die Organperfusionskammer ist mit Schnellverschlüssen flüssigkeits- und druckdicht hermetisch abgeschlossen. Als Organ 2 ist in dieser Ausführung eine Leber bei normothermer Temperatur eingelagert. Die Schutzhülle 21 ist ein impermeabler, transparenter Kunststoffbeutel.
Das ummantelte Organ 2 ist vollständig in einer Lagerflüssigkeit 4 schwebend eingelagert. Die Lagerflüssigkeit 4 ist ein Dialysat und ist ein Bestandteil des vitalerhaltenden Kreislaufes 5. Eine regelbare Temperatureinrichtung 3 ist als Heizmatte in der Organperfusionskammer 1 integriert. Mehrere Messsonden 6 liefern Signale für eine Prozesssteuerung und eine Füllstandsanzeige 61 verdeutlicht den Füllstand der Lagerflüssigkeit 4. Senkrecht auf der Organperfusionskammer 1 ist als Mittel zur Füllstandsanzeige 61 beispielgebend ein Steigrohr aufgesetzt. In Fig. 1 ist dieses Steigrohr um 90° in die Blattebene gedreht.

### Liste der verwendeten Bezugszeichen

- 1: Organperfusionskammer
- 2: Organ
- 21: impermeable Schutzhülle
- 3: regelbare Temperatureinrichtung
- 4: Lagerflüssigkeit/Dialysat
- 5: Vitalerhaltender Kreislauf
- 51: Dialysatkreislauf
- 52: Perfusionskreislauf
- 6: Messsonden
- 61: Füllstandsanzeige

## Patentansprüche

1. Anordnung zur extrakorporalen Organaufbewahrung mindestens bestehend aus einer Organperfusionskammer (1) mit einer regelbaren Temperatureinrichtung (3) und einem darin eingelagerten Organ (2), wobei das Organ (2) von einer impermeablen Schutzhülle (21) ummantelt und im weiteren vollständig von einer Lagerflüssigkeit (4) umgeben ist,
**dadurch gekennzeichnet, dass** die Lagerflüssigkeit (4) das Dialysat ist, welches Bestandteil eines vitalerhaltenden Kreislaufes (5), der sich aus einem Dialysatkreislauf (51) und einem Perfusatkreislauf (52) zusammensetzt, ist.

2. Anordnung nach Anspruch 1 **dadurch gekennzeichnet, dass** die Organperfusionskammer 1 flüssigkeits- und druckdicht abgeschlossen ist.

3. Anordnung nach Anspruch 1 **dadurch gekennzeichnet, dass** die regelbare Temperatureinrichtung (3) als Heizmatte ausgeführt ist.

4. Anordnung nach Anspruch 1 **dadurch gekennzeichnet, dass** die regelbare Temperatureinrichtung (3) in der Bewandung der Organperfusionskammer (1) integriert ist.

## Claims

1. Arrangement for extracorporeal organ conservation comprising at least an organ perfusion chamber (1) provided with a temperature control device (3) and with an organ (2) disposed therein, wherein the organ (2) is enclosed in an impermeable protective envelope (21) and furthermore surrounded completely by a storage fluid (4), **characterised in that** the storage fluid (4) is the dialysate which is part of a vitality-preserving circuit (5) formed by a dialysate circuit (51) and a perfusate circuit (52).

2. Arrangement according to Claim 1, **characterised in that** the organ perfusion chamber (1) is sealed so as to be liquid- and pressure-tight.

3. Arrangement according to Claim 1, **characterised in that** the temperature control device (3) is designed as a heating mat.

4. Arrangement according to Claim 1, **characterised in that** the temperature control device (3) is integrated into the walls of the organ perfusion chamber (1).

## Revendications

1. Dispositif de conservation extracorporelle d'organe, composé au moins d'une chambre de perfusion d'organe (1) avec un dispositif de régulation de température (3) et un organe (2) qui y est stocké, l'organe (2) étant entouré d'une enveloppe protectrice imperméable (21) et étant entièrement immergé dans une solution de conservation (4),
**caractérisé en ce que** la solution de conservation (4) est le dialysat faisant partie d'un circuit de maintien des fonctions vitales (5) composé d'un circuit de dialysat (51) et d'un circuit de perfusat (52).

2. Dispositif selon la revendication 1, **caractérisé en ce que** la chambre de perfusion d'organe (1) est étanche aux liquides et à la pression.

3. Dispositif selon la revendication 1, **caractérisé en ce que** le dispositif de régulation de température (3) est réalisé sous forme de natte chauffante.

4. Dispositif selon la revendication 1, **caractérisé en ce que** le dispositif de régulation de température (3) est intégré dans les parois de la chambre de perfusion d'organe (1).
